# EUROPÄISCHE PATENTANMELDUNG

(11) **EP 3 643 177 A1**
(43) Veröffentlichungstag der Anmeldung: **29.04.2020**
(21) Anmeldenummer: 18202862.1
(22) Anmeldetag: 26.10.2018
(51) Int. Cl.: A01N 59/16, A01N 25/08, A01P 1/00

(54) **ZINKMOLYBDAD MIT TRIKLINER KRISTALLSTRUKTUR ALS ANTIMIKROBIELLER WIRKSTOFF**

(71) Anmelder: Amistec GmbH & Co. KG, 6345 Kössen (AT)
(72) Erfinder: Die Erfindernennung liegt noch nicht vor
(74) Vertreter: Weickmann & Weickmann PartmbB

(57) **Zusammenfassung**

Die Erfindung betrifft die Verwendung einer triklinen Form von Zinkmolybdat (ZnMoO₄) als antimikrobieller Wirkstoff, Verbundwerkstoffe, welche solches Zinkmolybdat umfassen und Verfahren zur deren Herstellung.

## Beschreibung

Die Erfindung betrifft die Verwendung einer triklinen Form von Zinkmolybdat (ZnMoO₄) als antimikrobieller Wirkstoff, Verbundwerkstoffe, welche solches Zinkmolybdat umfassen und Verfahren zur deren Herstellung.

Um die Anlagerung von Mikroorganismen zu verhindern werden Oberflächen von Gegenständen mit antimikrobiellen Wirkstoffen behandelt oder mit antimikrobiellen Eigenschaften ausgestattet. Zur Bekämpfung der Mikroorganismen werden unter anderem Desinfektionsmittel bzw. Biozide eingesetzt. Ein großer Nachteil der Verwendung von organischen Bioziden ist jedoch die Entwicklung von Resistenzen und Kreuzresistenzen unter den Mikroorganismen. Daher wird vermehrt nach Alternativen gesucht, um Mikroorganismen wirkungsvoll zu bekämpfen und die Besiedelung von Oberflächen mit Mikroorganismen zu verhindern. Eine Möglichkeit besteht in der Verwendung von Metallen und Metallverbindungen. Aufgrund ihrer guten antimikrobiellen Wirkung werden insbesondere Silber und Kupfer häufig eingesetzt. Dabei wird in einer ersten Variante das elementare Metall in einer Form mit möglichst großer Oberfläche bereitgestellt, um eine hohe Aktivität zu erzielen. In Frage kommen hier insbesondere Nanopartikel, geschäumtes Metall oder auf einem Träger fixierte Nanopartikel. Eine zweite Variante sieht die Bereitstellung von löslichen Metallsalzen vor, die beispielsweise in Zeolithen oder direkt in ein Verbundmaterial eingebracht sind. Nachteilig ist jedoch, dass die genannten Edelmetalle bzw. Edelmetallionen vergleichsweise teuer sind und zudem durch schwefelhaltige Verbindungen oder hohe Elektrolytkonzentrationen nahezu vollständig inaktiviert werden.

In letzter Zeit wurde auch die Verwendung von Molybdaten und Wolframaten als antimikrobielle Wirkstoffe diskutiert. Diese Verbindungen sind vergleichsweise kostengünstig und zudem ungiftig, da sie in Wasser praktisch unlöslich sind. Die antimikrobielle Wirksamkeit der bisher untersuchten Molybdate und Wolframate ist jedoch häufig nicht ausreichend.

Aufgabe der vorliegenden Erfindung ist es daher, einen antibikrobiellen Wirkstoff mit verbesserter Aktivität und eine kostengünstige Möglichkeit zum effektiven Schutz von Materialien und Oberflächen gegen die Ansiedelung von Mikroorganismen bereitzustellen.

Zinkmolybdat, dessen antimikrobielle Wirkung im Fachbereich bereits beschrieben wurde, liegt üblicherweise in tetragonaler Kristallstruktur vor. Es ist in Wasser unlöslich und daher praktisch ungiftig. In der vorliegenden Erfindung wurde jedoch überraschend gefunden, dass Zinkmolybdat neben der bekannten tetragonalen Kristallstruktur auch in trikliner Kristallstruktur stabil vorliegen kann und in dieser Form eine deutlich höhere antimikrobielle Wirksamkeit zeigt als in andern Kristallformen. Die Wirkung ist im Vergleich zu der von tetragonalem Zinkmolybdat bei gleicher Korngröße signifikant verbessert.

Triklines Zinkmolybdat kann durch Ultraschall-unterstützte Umsetzung einer Lösung eines oder mehrerer wasserlöslicher Molybdate mit einer Lösung eines oder mehrerer wasserlöslicher Zink(II)salze erhalten werden. In Gegenwart von Ultraschall fällt das bei der Umsetzung der Eduktsalze entstehende wasserunlösliche Zinkmolybdat in Form trikliner Kristalle aus. Abhängig von der Dauer der Reaktion und der Beschallung kann dabei die Korngröße der triklinen Kristalle variieren.

Eine besonders gute antimikrobielle Wirksamkeit wurde erfindungsgemäß für Zinkmolybdat in Form von Partikeln mit trikliner Kristallstruktur und einer mittleren Korngröße zwischen 0,25 µm und 5,0 µm gefunden.

Ein erster Aspekt der Erfindung betrifft daher die Verwendung von Zinkmolybdat als antimikrobieller Wirkstoff, wobei ZnMoO₄ in Form von Partikeln mit trikliner Kristallstruktur und einer mittleren Korngröße zwischen 0,25 µm und 5,0 µm vorliegt.

Triklines Zinkmolybdat ist für Menschen und Tiere nicht toxisch und weist damit eine exzellente Biokompatibilität auf. Es kann vergleichsweise kostengünstig hergestellt werden und zeigt bereits in geringen Mengen eine starke antimikrobielle Wirkung. Darüber hinaus wird Zinkmolybdat durch schwefelhaltige Verbindungen oder durch eine hohe Elektrolytkonzentration nicht inaktiviert, sondern behält seine Wirksamkeit.

Zinkmolybdat mit trikliner Kristallstruktur und der oben angegebenen Korngröße zeigt eine hohe antimikrobielle Aktivität gegen ein breites Spektrum an Mikroorganismen, einschließlich Pilzen und Viren, sowie grampositiven und gramnegativen Mikroorganismen ungeachtet deren Antibiotikaresistenz. Beispiele für Mikroorganismen, gegen die triklines Zinkmolybdat gemäß der Erfindung wirksam ist sind unter anderem *Lactobacillus acidophilus,* Pseudomonas, *z.B. P. aeruginosa,* Salmonellen, z.B. S *aureus, E. coli, Candida Spp, C. albicans, C. glabrata und C. tropicalis,* Legionellen, Listerien; Vieren wie z.B. Influenza, Ebstein Barr Viren, Rotavieren und Noroviren; sowie *Aspergillus niger, fumigatus* und *flavus.* Die antimikrobielle Wirkung ist bei gleicher Korngröße im Vergleich zu Zinkmolybdat anderer Kristallstruktur deutlich erhöht.

Bevorzugt liegt die Korngröße von ZnMoO₄ im Bereich von 0,50-2,5 µm, weiter bevorzugt bei 0,7-1,5 µm. Kleinere Partikel als 0,25 µm und insbesondere Nanopartikel sind erfindungsgemäß nicht vorgesehen. Es wurde gefunden, dass bei einer triklinen Kristallstruktur von Zinkmolybdat bereits bei einer mittleren Korngröße in Mikrometerbereich eine hervorragende antimikrobielle Wirksamkeit erreicht wird, sodass die mit Nanopartikeln verbundenen Risiken vermieden werden können.

Triklines Zinkmolybdat selbst ist wasserunlöslich. Bei Kontakt mit Wasser, oder Luftfeuchtigkeit bewirkt Zinkmolybdat eine Absenkung des pH-Werts. Das Zinkmolybdat selbst geht dabei nicht in Lösung und wird nicht abgebaut oder aus einem Material ausgewaschen.

Für eine antimikrobielle Verwendung kann triklines Zinkmolybdat allein oder in Kombination mit weiteren Wirkstoffen und/oder Hilfsstoffen eingesetzt werden. In einer besonders bevorzugten Ausführungsform wird triklines Zinkmolybdat mit Molybdänoxid MoO₃ kombiniert, da sich dadurch die antimikrobielle Wirksamkeit noch weiter verbessern lässt. MoO₃ kann in grundsätzlich beliebiger Kristallstruktur vorliegen, beispielsweise orthorhombisch oder monoklin. MoO₃ mit orthorhomischer Kristallstruktur hat sich erfindungsgemäß als besonders vorteilhaft erwiesen. Triklines ZnMoO₄ und MoO₃ können in Form eines Gemischs von Kristallen oder als Mischkristalle vorliegen. Besonders bevorzugt ist die Verwendung eines Gemischs oder Mischkristalls von triklinem ZnMoO₄ und orthorhombischem MoO₃.

Weitere Vorteile ergeben sich, wenn triklines Zinkmolybdat in Kombination mit wenigsten einem Hydrophilierungs- oder Hygroskopierungsmittel verwendet wird. Besonders bevorzugte Hydrophilierungs- und Hygroskopierungsmittel werden nachstehend beschrieben.

Erfindungsgemäß kann triklines Zinkmolybdat in ein Material, welches mit antimikrobiellen Eigenschaften ausgestattet werden soll, eingebaut oder zumindest auf dessen Oberfläche abgelagert werden. Auf diese Weise resultiert ein antimikrobiell wirksamer Verbundwerkstoff.

Ein weiterer Gegenstand der Erfindung ist dementsprechend ein antimikrobiell wirksamer Verbundwerkstoff umfassend ZnMoO₄ in Form von Partikeln mit trikliner Kristallstruktur und einer mittleren Korngröße zwischen 0,25 µm und 5,0 µm und wenigstens einem weiteren Werkstoff. Bevorzugt liegt die mittlere Korngröße wie oben angegeben zwischen 0,70 µm und 2,5 µm und insbesondere im Bereich von 0,70-1,50 µm.

Unter einem Verbundwerkstoff wird im Sinne der vorliegenden Erfindung ein Werkstoff verstanden, der aus zwei oder mehreren miteinander verbundenen Materialien besteht, wobei zumindest eines der Materialien das trikline Zinkmolybdat wie oben definiert ist. Der weitere Werkstoff kann grundsätzlich aus einem beliebigen Material ausgebildet sein und beispielsweise auch selbst einen Verbundwerkstoff darstellen.

Die Anwesenheit von triklinem Zinkmolybdat verleiht einem erfindungsgemäßen Verbundwerkstoff eine antimikrobielle Wirkung. Die Haftfähigkeit pathogener Keime ist stark reduziert. Die Proliferation von Mikroorganismen und die Biofilmbildung werden gehemmt. Dies ist beispielsweise in Krankenhäusern, Pflegeheimen usw. von besonderer Bedeutung, da Mikroorganismen in Biofilmen durch Antibiotika, organische Biozide, Desinfektionsmittel und dergleichen nicht oder zumindest nicht dauerhaft entfernbar sind. Da eine Absenkung des pH-Werts lediglich im Bereich der Oberflächengrenzschicht des Verbundwerkstoffs, bzw. eines aus diesem gefertigten Bauteils oder Produkts benötigt wird, sind entsprechend geringe Mengen an Zinkmolybdat im Bereich der Oberfläche ausreichend, um die gewünschte antimikrobielle Wirksamkeit zu erreichen.

Triklines Zinkmolybdat ist im Wesentlichen nicht wasserlöslich, sodass es aus dem Verbundwerkstoff nicht ausgewaschen wird, sondern dort verbleibt und über die gesamte Lebensdauer des Verbundwerkstoffs seine antimikrobielle Wirksamkeit aufrechterhalten bleibt. In diesem Zusammenhang wurde überraschend gefunden, dass triklines Zinkmolybdat sogar noch besser im Werkstoff zurückgehalten wird als Zinkmolybdat mit anderer Kristallstruktur.

Der wenigstens eine weitere Werkstoff des Verbundwerkstoffs kann grundsätzlich aus beliebigen Werkstoffklassen ausgewählt sein. Beispielsweise kann es sich um einen anorganischen, metallischen, keramischen oder organischen Werkstoff oder beliebige Kombinationen davon handeln. Als weitere Werkstoffe kommen grundsätzlich beispielsweise Kunststoffe, Farben, Lacke, Silikone, Gummi, Kautschuk, Melamin, Acrylate, Methylacrylate, Wachse, Epoxydharze, Glas, Metall, Keramik und weitere in Frage. In einer bevorzugten Ausführungsform umfasst der erfindungsgemäße Verbundwerkstoff als weiteren Werkstoff zumindest ein organisches Polymer, bzw. ein Compound und/oder ein Silikon. Der Werkstoff, in oder auf welchen zum Zwecke der antimikrobiellen Ausstattung das trikline Zinkmolybdat eingebracht wird, kann eine feste und/oder flüssige Matrix bilden. Es kann vorgesehen sein, dass triklines Zinkmolybdat derart zugegeben wird, dass es zwischen 0,1 % und 10 % (Gewichts- oder Volumenprozente) des Gesamtgewichts bzw. Gesamtvolumens ausmacht.

Der Verbundwerkstoff kann grundsätzlich als Schichtverbund, Faserverbund, Teilchenverbund oder Durchdringungsverbund ausgebildet sein.

Im Prinzip kann der erfindungsgemäße Verbundwerkstoff bei Standardbedingungen fest oder flüssig vorliegen. Beispielsweise kann der Verbundwerkstoff in Form einer Lösung, Suspension und/oder Dispersion, beispielsweise als Lack bzw. flüssiges Beschichtungsmittel ausgebildet sein.

Triklines Zinkmolybdat kann auf der Oberfläche des Verbundwerkstoffs angeordnet und/oder im Verbundwerkstoff verteilt sein. Bevorzugt ist gemäß der Erfindung eine Anordnung von triklinem Zinkmolybdat im Bereich der Oberfläche des Verbundwerkstoffs, da hier eine antimikrobielle Wirkung gewünscht ist. Beispielsweise kann Zinkmolybdat als Schicht oder Bestandteil einer Schicht auf ein Substrat bzw. Trägermaterial aufgebracht sein. Grundsätzlich können dabei nur ein oder mehrere Bereiche der Oberfläche oder die gesamte Oberfläche des Verbundwerkstoffs durch triklines Zinkmolybdat antimikrobiell ausgestattet sein. Alternativ oder zusätzlich kann triklines Zinkmolybdat auch innerhalb des Verbundwerkstoffs angeordnet bzw. im Verbundwerkstoff verteilt vorliegen. Dadurch wird gewährleistet, dass die antimikrobielle Wirkung auch bei einer oberflächlichen Abnutzung des Verbundwerkstoffs dauerhaft erhalten bleibt.

In Abhängigkeit des Verwendungszwecks kann der Verbundwerkstoff im Rahmen der vorliegenden Erfindung grundsätzlich als Halbzeug, d.h. als halbfertiges Material vorliegen, das erst nach weiteren Verarbeitungsschritten seine endgültige Verwendungsform erreicht. Alternativ kann der Verbundwerkstoff bereits als fertiges Bauteil ausgebildet sein, welches ohne weitere Verarbeitungsschritte seinem gewünschten Verwendungszweck zugeführt werden kann.

In einem erfindungsgemäßen Verbundwerkstoff kann triklines Zinkmolybdat allein oder in Kombination mit weiteren Wirkstoffen und/oder Hilfsstoffen enthalten sein. In einer besonders bevorzugten Ausführungsform wird triklines Zinkmolybdat mit Molybdänoxid MoO₃ kombiniert, da sich dadurch die antimikrobielle Wirksamkeit noch weiter verbessern lässt. MoO₃ kann in grundsätzlich beliebiger Kristallstruktur vorliegen, beispielsweise orthorhombisch oder monoklin. MoO₃ mit orthorhomischer Kristallstruktur hat sich erfindungsgemäß als besonders vorteilhaft erwiesen. Triklines ZnMoO₄ und MoO₃ können in Form eines Gemischs von Kristallen oder als Mischkristalle vorliegen. Besonders bevorzugt ist die Verwendung eines Gemischs oder Mischkristalls von triklinem ZnMoO₄ und orthorhombischem MoO₃.

In einer bevorzugten Ausführungsform weist ein erfindungsgemäßer Verbundwerkstoff neben triklinem ZnMoO₄ und ggf. MoO₃ keine zusätzlichen antimikrobiell wirksamen Verbindungen, wie beispielsweise Silber oder Silberverbindungen, insbesondere Nanosilber oder lösliche Silberverbindungen wie Silbernitrat oder dergleichen auf. Kupfer, organische Biozide, Zeolithe und dergleichen sind vorzugsweise ebenfalls nicht in einem erfindungsgemäßen Verbundwerkstoff enthalten. Auf diese Weise werden eine bessere Umweltverträglichkeit und eine erhebliche Kostensenkung erreicht.

Der Massegehalt von triklinem Zinkmolybdat bezogen auf die Gesamtmasse des Verbundwerkstoffs liegt vorteilhafterweise zwischen 0,1 und 80 Gew.-%, insbesondere zwischen 1,5 und 30 Gew.-% und vorzugsweise zwischen 1,8 und 5,0 Gew.-%. Bei diesem Massenverhältnis wird eine besonders hohe antimikrobielle Wirksamkeit bei möglichst geringem Materialeinsatz an Zinkmolybdat sichergestellt.

Die Verwendung von Partikeln mit den genannten mittleren Korngrößen bietet den besonderen Vorteil, dass einerseits eine besonders hohe antimikrobielle Wirksamkeit realisiert werden kann und der erfindungsgemäße Verbundwerkstoff andererseits frei von Nanopartikeln ist.

Weitere Vorteile ergeben sich, wenn triklines Zinkmolybdat in Kombination mit wenigsten einem Hydrophilierungs- oder Hygroskopierungsmittel verwendet wird, das zumindest im Bereich der Oberfläche des Verbundwerkstoffs angeordnet ist. Auf diese Weise wird die antimikrobielle Wirksamkeit in besonders trockenen Umgebungen, also beispielsweise bei sehr geringer Luftfeuchtigkeit und dementsprechend geringen verfügbaren Wassermengen, die für das Ausbilden einer sauren Oberflächengrenzschicht wichtig sind, wesentlich erhöht. Beispiele für geeignete Hydrophilierungs- und/oder Hygroskopierungsmittel sind insbesondere SiO₂, insbesondere in Form von Kieselgel oder als pyrogenes Siliziumdioxid. Diese bilden eine Art Feuchtigkeitspuffer und gewährleisten so eine Mindestfeuchte im Produkt. Außerdem wurde gefunden, dass die Assoziation von triklinem Zinkmolybdat mit SiO₂ bewirkt, dass triklines Zinkmolybdat besonders gut in dem Verbundwerkstoff zurückgehalten wird und ein Auswaschen vollständig verhindert werden kann. SiO₂ wird vorzugsweise mit einer Partikelgrößenverteilung im Bereich zwischen 0,25 µm und 25 µm mittlerer Partikeldurchmesser verwendet.

Weitere Beispiele für weitere erfindungsgemäß verwendbare Hydrophilierungs- und/oder Hygroskopierungsmittel sind organische Säuren, wie etwa Abietinsäure, Arachidonsäure, Arachinsäure, Behensäure, Caprinsäure, Capronsäure, Cerotinsäure, Erucasäure, Fusarinsäure, Fumarsäure, Gallensäuren, Icosensäure, Isophthalsäure, Lactonsäure, Laurinsäure, Lignocerinsäure, Linolensäure, Lävopimarsäure, Linolsäure, Margarinsäure, Melissinsäure, Montansäure, Myristinsäure, Neoabietinsäure, Nervonsäure, Nonadecansäure, Ölsäure, Palmitinsäure, Palmitoleinsäure, Pelargonsäure (Nonansäure), Pimarsäure, Palustrinsäure, Palmitinsäure, Rizinolsäure, Stearinsäure, Sorbinsäure, Tanninsäure, Tridecansäure, Undecansäure und Vulpinsäure. Weiterhin haben sich Malonsäure, Maleinsäure und Maleinsäureanhydrid, Milchsäure, Essigsäure, Zitronensäure, Salicylsäure und Ascorbinsäure, sowie deren Salze als vorteilhaft erwiesen. Ebenfalls verwendet können Säureanhydride, ampholytische Substanzen, Puffersysteme, Polymersäuren, lonentauscherharze, sowie Säuresulfonate und Säurehalogenide.

Der Massengehalt an Hydrophilierungs und/oder Hygroskopierungsmittel bezogen auf das Gesamtgewicht des Verbundwerkstoffs liegt vorteilhafterweise im Bereich von 0,1 % und 15 %. Beispielsweise kann der Massengehalt 0,5 %, 1 %, 2 %, 3 %, 4 %, 5 %, 6 %, 7 %, 8 %, 9 %, 10 %, 11 %, 12 %, 13 % oder 14 % betragen. Besonders vorteilhaft ist ein Massengehalt im Bereich zwischen 1 und 5 %, bevorzugt im Bereich von 2-4 %. Weiterhin kann der Massengehalt bzw. das Massenverhältnis des Hydrophilierungs- und/oder Hygroskopierungsmittels derart eingestellt werden, dass er dem gewählten Massengehalt an triklinem Zinkmolybdat entspricht.

In einer besonders bevorzugten Ausführungsform wird triklines Zinkmolybdat zumindest teilweise mit dem Hydrophilierungs- und/oder Hygroskopierungsmittel, insbesondere SiO₂ beschichtet und/oder agglomeriert. Dadurch wird auf einfache Weise eine räumliche Nähe der beiden Verbindungsklassen sichergestellt, sodass Zinkmolybdat auch unter besonders trockenen Bedingungen unmittelbar mit der zur Senkung des pH-Werts erforderlichen Feuchtigkeit versorgt wird.

In einem weiteren Aspekt der vorliegenden Erfindung ist die Verwendung eines antimikrobiell wirksamen Verbundwerkstoffs wie oben definiert zur Herstellung eines antimikrobiell wirksamen Produkts vorgesehen.

Ein weiterer Aspekt der Erfindung betrifft ein Verfahren zur Herstellung eines antimikrobiell wirksamen Verbundwerkstoffs wie vorstehend definiert. Hierzu wird Zinkmolybdat in Form von Partikeln in einer mittleren Korngröße zwischen 0,25 und 5,0 µm bereitgestellt und mit wenigstens einem weiteren Werkstoff verbunden.

Triklines Zinkmolybdat kann hergestellt werden, durch Ultraschall-unterstützte Umsetzung eines oder mehrerer wasserlöslicher Molybdate mit einem oder mehreren wasserlöslichen Zink(II)salzen. Hierfür werden separat voneinander jeweils wässrige Lösungen von Molybdat und Zinksalz bereitgestellt und unter Einwirkung von Ultraschall in Kontakt gebracht. Die Gegenwart von Ultraschall bewirkt dabei, dass Zinkmolybdat in trikliner Kristallstruktur auskristallisiert. Durch Dauer und Intensität des Ultraschalls kann die Teilchengröße des Zinkmolybdats eingestellt werden. In einer bevorzugten Ausführung der Erfindung wird triklines Zinkmolybdat hergestellt durch in Kontakt bringen einer wässrigen Lösung eines oder mehrerer Alkali oder Erdalkali-Molybdate mit einer wässrigen Lösung eines oder mehrerer Zink(II)-Salze. Als wasserlösliches Zinkmolybdat kann beispielsweise Natriummolybdat-Dihydrat eingesetzt werden. Als Zink(II)-Salz kann beispielsweise ein Zinkhalogenid wie Zinkchlorid verwendet werden. Die Umsetzung der beiden Salzlösungen erfolgt vorzugsweise bei Raumtemperatur in Gegenwart von Ultraschall mit einer Frequenz von mehr als 15 kHz, insbesondere 20-30 kHz.

Vorteilhafterweise wird bei der Herstellung eines Verbundwerkstoffs das trikline Zinkmolybdat mit wenigstens einem Hydrophilierungs- und/oder Hygroskopierungsmittel wie vorstehend definiert kombiniert, wobei das Hydrophilierungs- und/oder Hygroskopierungsmittel zumindest im Bereich der Oberfläche des Verbundwerkstoffs angeordnet wird. Als besonders vorteilhaft hat es sich erwiesen, Zinkmolybdat zumindest teilweise mit dem Hydrophilierungs- und/oder Hygroskopierungsmittel, insbesondere SiO₂ zu beschichten und/oder zu agglomerieren.

Die vorliegende Erfindung soll durch die nachfolgenden Figuren und Beispiele weiter veranschaulicht werden.

### Figuren

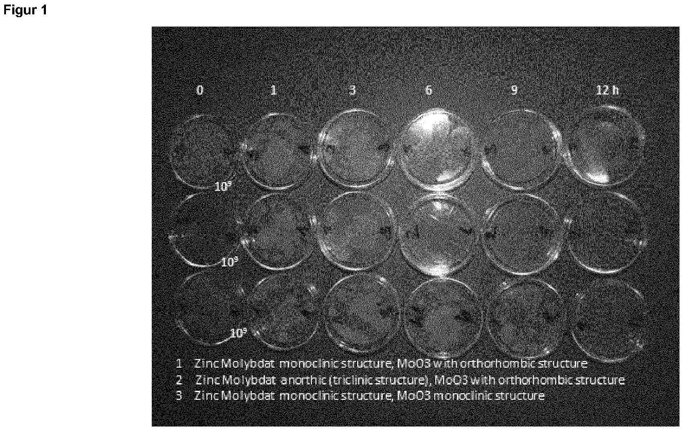

- **Fig. 1**: zeigt die antimikrobielle Wirksamkeit unterschiedlicher Kristallformen von Zinkmolybdat: 1) monoklines ZnMoO₄ mit orthorhombischem MoO₃; 2) triklines ZnMoO₄ mit orthorhombischem MoO₃; 3) monoklines ZnMoO₄ mit amorphem MoO₃. Zinkmolybdat ist anderen Kristallformen klar überlegen und zeigt bereits nach 6 h eine völlige Keimfreiheit der untersuchten Probe.

Die Untersuchungen auf Wirksamkeit wurden mit 3 ATCC Referenzkeimen (*S. aureus* ATCC 25923, *E. coli* ATCC 25022 und *P.aeruginosa* ATCC 15442) durchgeführt. Alle angeführten Keime waren empfindlich. Es wurde kein resistenter Keim gefunden; auch Lactobacillus acidophilus (säureresistent) wurde eradiziert.

## Patentansprüche

1. Verwendung von Zinkmolybdat (ZnMoO₄) als antimikrobieller Wirkstoff, wobei ZnMnO₄ in Form von Partikeln mit trikliner Kristallstruktur und einer mittleren Korngröße zwischen 0,25 µm und 5,0 µm vorliegt.

2. Verwendung nach Anspruch 1, wobei die mittlere Korngröße von ZnMoO₄ im Bereich von 0,50 bis 2,5 µm, bevorzugt im Bereich von 0,70 bis 1,5 µm beträgt.

3. Verwendung nach Anspruch 1 oder 2, wobei ZnMoO₄ in Kombination mit MoO₃, vorzugsweise orthorhombischem MoO₃ verwendet wird.

4. Antimikrobiell wirksamer Verbundwerkstoff, umfassend ZnMoO₄ in Form von Partikeln mit trikliner Kristallstruktur und einer mittleren Korngröße zwischen 0,25 µm und 5,0 µm und wenigstens einen weiteren Werkstoff.

5. Antimikrobiell wirksamer Verbundwerkstoff nach Anspruch 4, weiterhin umfassend MoO₃ mit vorzugsweise orthorhombischer Kristallstruktur das im Gemisch oder als Mischkristall mit dem triklinen ZnMoO₄ vorliegt.

6. Antimikrobiell wirksamer Verbundwerkstoff nach Anspruch 4 oder 5, weiterhin umfassend wenigstens ein Hydrophilierungs- und/oder Hygroskopierungsmittel das zumindest im Bereich der Oberfläche des Verbundwerkstoffs angeordnet ist.

7. Verbundwerkstoff nach Anspruch 6,
**dadurch gekennzeichnet, dass**
das ZnMoO₄ zumindest teilweise mit dem Hydrophilierungs- und/oder Hygroskopierungsmittel beschichtet und/oder agglomeriert ist.

8. Verbundwerkstoff nach Anspruch 6 oder 7, wobei das Hydrophilierungs- und/oder Hygroskopierungsmittel SiO₂, insbesondere Kieselgel oder pyrogenes Siliciumdioxid, umfasst.

9. Verbundwerkstoff nach einem der Ansprüche 4 bis 8,
**dadurch gekennzeichnet, dass**
der Massegehalt von ZnMoO₄ bezogen auf die Gesamtmasse des Verbundwerkstoffs 0,1 % bis 80 %, insbesondere 1,5 % bis 30 % und vorzugsweise 1,8 % bis 5,0 % beträgt.

10. Verbundwerkstoff nach einem der Ansprüche 3-9
**dadurch gekennzeichnet, dass**
der weitere Werkstoff zumindest ein organisches Polymer und/oder Silikon umfasst.

11. Verbundwerkstoff nach einem der Ansprüche 3-10
**dadurch gekennzeichnet, dass**
er als Schicht-Verbund, Faser-Verbund- Teilchen-Verbund oder Durchdringungsverbund ausgebildet ist.

12. Verwendung eines antimikrobiell wirksamen Verbundwerkstoffs nach einem der Ansprüche 3-11 zur Herstellung eines antimikrobiell wirksamen Produkts.

13. Verfahren zur Herstellung eines antimikrobiell wirksamen Verbundwerkstoffs nach einem der Ansprüche 3-11,
**dadurch gekennzeichnet, dass**
ZnMoO₄ in Form von Partikeln mit einer mittleren Korngröße zwischen 0,25 µm und 5,0 µm mit wenigstens einem weiteren Werkstoff verbunden wird.

14. Verfahren nach Anspruch 13,
**dadurch gekennzeichnet, dass**
das ZnMoO₄ hergestellt wird durch Ultraschall-unterstützte Umsetzung eines oder mehrerer wasserlöslicher Molybdate mit einem oder mehreren Zink (II)-Salzen in wässriger Lösung.

15. Verfahren nach Anspruch 16,
**dadurch gekennzeichnet, dass**
eine wässrige Lösung von Natriummolybdat-dihydrat bei Raumtemperatur mit einer wässrigen Lösung von Zinkchlorid in Gegenwart von Ultraschall mit einer Frequenz von mehr als 15 kHz, insbesondere 20-30kHz, umgesetzt wird.

16. Verfahren nach einem der Ansprüche 13-15
**dadurch gekennzeichnet, dass**
wenigstens ein Hydrophilierungs- und/oder Hygroskopierungsmittel zumindest im Bereich der Oberfläche des Verbundwerkstoffs angeordnet wird.

17. Verfahren nach Anspruch 16,
**dadurch gekennzeichnet, dass**
ZnMoO₄ zumindest teilweise mit dem Hydrophilierungs- und/oder Hygroskopierungsmittel beschichtet und/oder agglomeriert wird.
